# EUROPEAN PATENT APPLICATION

(11) **EP 4 576 323 A1**
(43) Date of publication of application: **25.06.2025**
(21) Application number: 24192107.1
(22) Date of filing: 31.07.2024
(51) Int. Cl.: H01M 10/48, H01M 50/209, H01M 50/375

(54) **BATTERY MODULE AND BATTERY PACK**

(30) Priority: 22.12.2023 CN 202323527750 U
(71) Applicant: Eve Energy Storage Co., Ltd., Wuhan, Hubei 430000 (CN)
(72) Inventor: DING, Hongtao, Wuhan,Hubei, 430000 (CN)
(74) Representative: Herrero & Asociados, S.L.

(57) **Abstract**

A battery module includes: a housing (11), a cell (12), and a first detection unit (13). The housing defines a receiving space (101), a pressure relief port (102) communicated with the receiving space, and a first air inlet (103) communicated with the receiving space. A pressure relief mechanism (11a) is arranged in the pressure relief port, an air intaking mechanism (11b) is arranged in the first air inlet. The cell is received in the receiving space. The first detection unit is mounted on the housing and configured to detect a predetermined object. The first detection unit is electrically connected to the pressure relief mechanism. When the cell has thermal runaway, the pressure relief mechanism exposes the pressure relief port. When a pressure in the receiving space is less than or equal to a pressure threshold, the air intaking mechanism exposes the first air inlet.

## Description

### TECHNICAL FIELD

The present disclosure relates to the field of batteries, and in particular to a battery module and a battery pack.

### BACKGROUND

As the new energy technology develops increasingly quickly, the battery module has been widely used in various new-energy vehicles and energy storage power stations. When the battery module is in use, if a short circuit occurs or the battery module is over-charged, a large amount of heat may be accumulated inside the battery module, such that thermal runaway may be caused, resulting in an internal pressure of the battery module being excessively high to cause fire or even explosion.

In the art, a pressure relief valve is mounted on the battery module. When the internal pressure of the battery module is excessively high, the pressure relief valve is flushed to be open to release the internal pressure of the battery module, i.e., a passive resealing method is achieved. For the passive resealing method, in some cases, the pressure relief valve may be unable to be flushed to be open, such that the internal pressure of the battery module cannot be released.

### SUMMARY OF THE DISCLOSURE

The present disclosure provides a battery module and a battery pack, to proactively discharge the air. A situation in which, even though thermal runaway of the cell occurs, the internal pressure of the housing does not flush to open the pressure relief valve, may be avoided.

In a first aspect, a battery module is provided and includes: a housing, a cell, and a first detection unit. The housing defines a receiving space, a pressure relief port communicated with the receiving space, and a first air inlet communicated with the receiving space. A pressure relief mechanism is arranged in the pressure relief port, an air intaking mechanism is arranged in the first air inlet. The cell is received in the receiving space. The first detection unit is mounted on the housing and configured to detect a predetermined object. The first detection unit is electrically connected to the pressure relief mechanism; in response to the first detection unit detecting that the cell has thermal runaway, the pressure relief mechanism exposes the pressure relief port; in response to the first detection unit detecting that a pressure in the receiving space is less than or equal to a pressure threshold, the air intaking mechanism exposes the first air inlet.

In a second aspect, a battery pack is provided and includes a battery management unit and the battery module as descried in the above. The battery management unit is electrically connected to the pressure relief mechanism, the cell, and the first detection unit.

According to the present disclosure, the battery module includes a housing, a cell, and a first detection unit. The housing defines a receiving space, a pressure relief port communicated with the receiving space, and a first air inlet communicated with the receiving space. A pressure relief mechanism is arranged in the pressure relief port, and an air intaking mechanism is arranged in the first air inlet. The cell is received in the receiving space. The first detection unit is mounted on the housing and is configured to detect a predetermined object. The first detection unit is electrically connected to the pressure relief mechanism. The first detection unit, in response to detecting thermal runaway of the cell, the pressure relief mechanism is opened to expose the pressure relief port. In response to a pressure inside the receiving space being less than or equal to a pressure threshold, the air intaking mechanism is opened to expose the first air inlet. On the one hand, the first detection unit proactively detects the predetermined object. When the cell has thermal runaway, air is released actively. Compared to the passive air releasing method in the art, the active air releasing in the present disclosure avoids a situation in which, even though the cell has the thermal runaway, the internal pressure of the housing does not flush to open the pressure relief valve, such that failure of releasing the internal pressure of the housing is prevented. On the other hand, when the pressure inside the receiving space is less than or equal to the pressure threshold, the air intaking mechanism is opened to expose the first air inlet, such that external air may enter the receiving space, further alleviating the thermal runaway of the cell.

### BRIEF DESCRIPTION OF THE DRAWINGS

In order to more clearly illustrate the technical solutions in the embodiments of the present disclosure, accompanying drawings for describing the embodiments will be introduced briefly in the following. Obviously, the following described accompanying drawings are only some of the embodiments of the present disclosure, any ordinary skilled person in the art may obtain other accompanying drawings based on the following drawings without any creative work.
FIG. 1 is a perspective view of a battery module according to an embodiment of the present disclosure.
FIG. 2 is an exploded view of the battery module shown in FIG. 1.
FIG. 3 is a cross-sectional view of a housing and a pressure relief valve shown in FIG. 1, taken along a line F1-F1.
FIG. 4 is a cross-sectional view of the housing shown in FIG. 3.
FIG. 5 is a perspective view of the battery module according to another embodiment of the present disclosure.
FIG. 6 is a cross-sectional view of the battery module shown in FIG. 5, taken along a line F2-F2.
FIG. 7 is a perspective view of a battery pack according to an embodiment of the present disclosure.
FIG. 8 is a schematic diagram of the battery pack shown in FIG. 8.
FIG. 9 is a cross-sectional view of the battery pack shown in FIG. 7, taken along a line F3-F3.

### DETAILED DESCRIPTION

The terms "first", "second", and "third" in the present disclosure are used for descriptive purposes only and shall not be interpreted as indicating or implying relative importance or implicitly specifying the number of indicated technical features. Therefore, a feature defined by the "first", the "second", the "third" may explicitly or implicitly include at least one such feature. In the description of the present disclosure, "plurality" means at least two, such as two, three, and so on, unless otherwise expressly and specifically limited. Furthermore, the terms "include", "have", and any variations thereof, are intended to cover non-exclusive inclusion. A process, a method, a system, a product or an apparatus including a series of steps or units is not limited to the listed steps or units, but may further include steps or units that are not listed or steps or units that are inherently included in the process, the method, the system, the product or the apparatus.

Particular features, structures, or properties described in an embodiment may be included in at least one embodiment of the present disclosure.

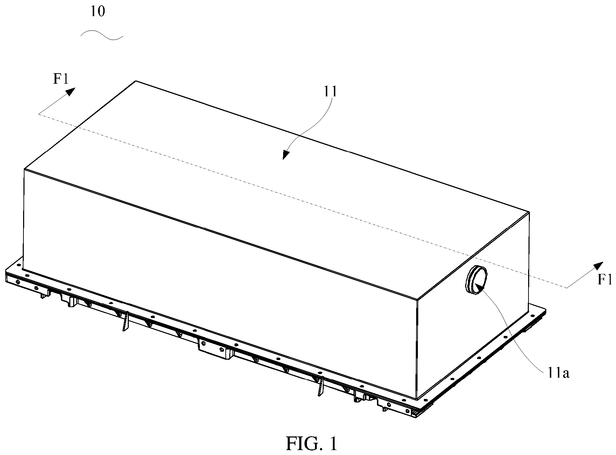

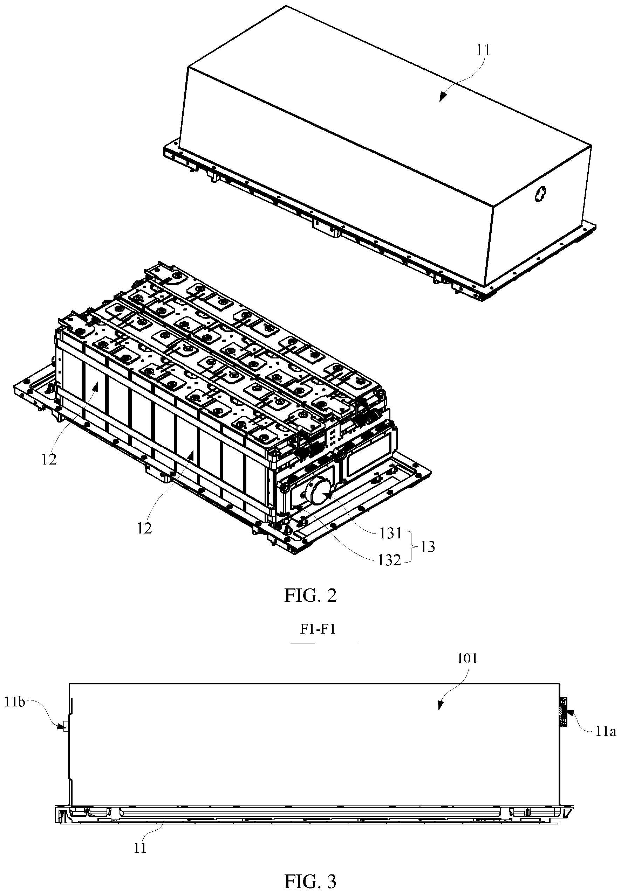

As shown in FIGS. 1 and 2, FIG. 1 is a perspective view of a battery module 10 according to an embodiment of the present disclosure, and FIG. 2 is an exploded view of the battery module 10 in FIG. 1. The battery module 10 in the present embodiment includes a housing 11, a cell 12, and a first detection unit 13.

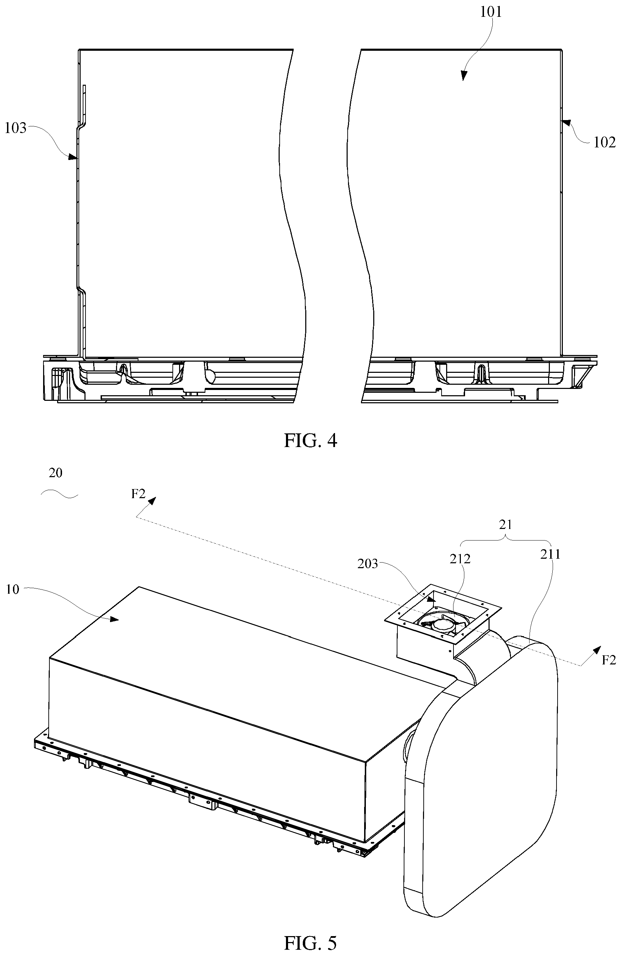

As shown in FIGS. 3 and 4, FIG. 3 is a cross-sectional view of the housing 11and a pressure relief mechanism 11a shown in FIG. 1, taken along a line F1-F1, and FIG. 4 is a cross-sectional view of the housing 11 shown in FIG. 3. The housing 11 defines a receiving space 101, a pressure relief port 102, and a first air inlet 103. The pressure relief port 102 and the first air inlet 103 are communicated with the receiving space 101. The cell 12 is received in the receiving space 101. In practice, a plurality of cells 12 may be arranged, and the plurality of cells 12 are arranged in the receiving space 101 in a bus manner.

The pressure relief mechanism 11a is arranged in the pressure relief port 102, and an air intaking mechanism 11b is arranged in the first air inlet 103.

As shown in FIGS. 2, 3, and 4, the first detection unit 13 is mounted on the housing 11 and is configured to detect a predetermined object. The first detection unit 13 is electrically connected to the pressure relief mechanism 11a. When the first detection unit 13 detects that the cell 12 has thermal runaway, the pressure relief mechanism 11a is opened to expose the pressure relief port 102 to release the internal pressure of the housing 11. In this way, a fire or even an explosion, caused by the internal pressure of the housing 11 being excessively high, may be avoided. In the present disclosure, the first detection unit 13 proactively detects the predetermined object, such that when the cell has thermal runaway, an air inside the receiving space is released actively. Compared to the passive air releasing method in the art, the active air releasing in the present disclosure avoids a situation in which, even though the cell 12 has the thermal runaway, the internal pressure of the housing 11 does not flush to open the pressure relief valve, such that failure of releasing the internal pressure of the housing 11 is prevented.

Further, when the pressure inside the receiving space 101 is less than or equal to the pressure threshold, the air intaking mechanism 11b is opened to expose the first air inlet 103, such that the external air is allowed to enter the receiving space 101 to further alleviate the thermal runaway of the cell 12. It is understood that a specific value of the pressure threshold can be determined according to the actual needs, which will not be limited herein.

In some embodiments, in practice, the pressure relief mechanism 11a may be a solenoid valve. When it is determined that the cell 12 has thermal runaway, the solenoid valve is controlled to expose the pressure relief port 102. The air intaking mechanism 11b may be a pressure valve or the solenoid valve. For example, when the pressure inside the receiving space 101 is less than or equal to the pressure threshold, an external pressure out of the housing 11 is greater than the internal pressure of the housing 11. In this case, the external air automatically rushes to open the pressure valve to enter the housing 11.

In some embodiments, the pressure relief port 102 and the first air inlet 103 are located at opposite sides of the housing 11, such that a flowing direction of discharging the air out of the housing is the same as a flowing direction of intaking the air into the housing, and stability of the flowing during the discharging process and the intaking process may be improved.

In an application scenario, the first detection unit 13 includes a temperature detector 131 configured to detect a temperature of the cell 12. When the temperature of the cell 12 is greater than or equal to a temperature threshold, the pressure relief mechanism 11a is opened to expose the pressure relief port 102. That is, in the present application scenario, the above-described predetermined object is the cell 12, and a detection result of the first detection unit 13 is the temperature of the cell 12. In this way, heat gathering caused by the thermal runaway of the cell 12 is avoided, such that a fire or an explosion caused by the internal pressure of the housing 11 being excessively high may be avoided.

It is understood that, in practice, a location where the temperature detector 131 is mounted may be determined according to the actual need, and the temperature threshold may also be determined according to the actual need, which will not be limited herein. For example, the temperature detector 131 may be mounted on the housing 11, and the temperature threshold may be greater than or equal to 75°C.

In another application scenario, the first detection unit 13 includes an air detector 132, configured to detect composition of the air inside the receiving space 101. When the composition inside the receiving space 101 contains a thermal-runaway gas, the pressure relief mechanism 11a is opened to expose the pressure relief port 102. That is, in the present application scenario, the above-described predetermined object is the air inside the receiving space 101, and a detection result of the first detection unit 13 is the composition inside the receiving space 101. In this way, a personnel may be protected from being poisoned by any toxic air generated during the thermal runaway of the cell 12, and a fire or an explosion can be prevented.

It is understood that, in practice, a location where the air detector 132 is mounted can be determined according to the actual need, and the composition in the receiving space 101 that is to be detected is also determined according to the actual need, which will not be limited herein. For example, the air detector 132 may be mounted on the housing 11, and the to-be-detected composition in the receiving space 101 may be at least one of hydrogen, carbon monoxide, methane, and so on.

In the present embodiment, the first detection unit 13 takes the temperature detector 131 and the air detector 132 to perform detection. When the temperature of the cell 12 is greater than or equal to the temperature threshold value and the composition in the receiving space 101 contains the thermal-runaway gas, the first detection unit 13 determines that the cell 12 has the thermal runaway and controls the pressure relief mechanism 11a to expose the pressure relief port 102. In this way, accuracy of detecting the thermal runaway of the cell 12 is improved.

In some embodiments, the battery module 10 in the present embodiment further includes a second detection unit (not shown in the drawing) configured to detect a pressure inside the receiving space 101. For example, the air intaking mechanism 11b may be the solenoid valve. When the second detection unit detects that the pressure inside the receiving space 101 is less than or equal to the pressure threshold, the second detection unit controls the solenoid valve to expose the first inlet 103. In this way, the pressure inside the receiving space 101 is detected proactively.

It is understood that, in practice, a location where the second detection unit is mounted may be determined according to the actual need. For example, the second detection unit may be mounted on the housing 11.

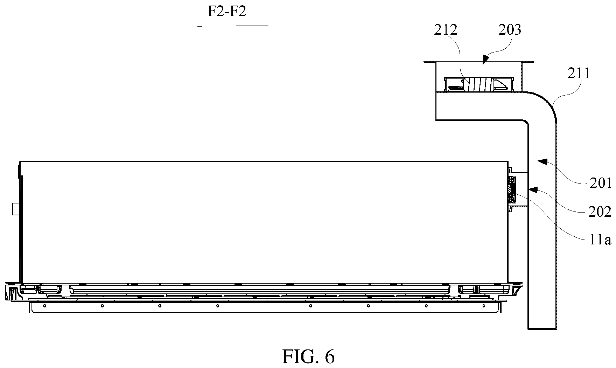

As shown in FIG. 5, FIG. 5 is a perspective view of the battery module 20 according to another embodiment of the present disclosure, and FIG. 6 is a cross-sectional view of the battery module 20 shown in FIG. 5, taken along a line F2-F2. The battery module 20 in the present embodiment further includes an air discharging unit 21. The other structures of the battery module 20 in the present embodiment are the same as those of the battery module 10 in the above-described embodiment and will not be repeatedly described herein.

The air discharging unit 21 is communicated with the pressure relief port 102 when the pressure relief mechanism 11a exposes the pressure relief port 102, such that the air in the receiving space 101 is discharged, and an efficiency of discharging the air from the receiving space 101 is improved.

. Further, the air discharging unit 21 includes an air discharging member 211 and an air discharging mechanism 212. The air discharging member 211 defines an air discharging channel 201, a second air inlet 202 communicated with the air discharging channel 201, and an air outlet 203 communicated with the air discharging channel 201. When the pressure relief mechanism 11a exposes the pressure relief port 102, the second air inlet 202 is communicated with the pressure relief port 102. The air discharging mechanism 212 is disposed in the air outlet 203, such that the air in the receiving space 101 is discharged by flowing from the pressure relief port 102 and the second air inlet 202 successively to enter the air discharging channel 201, and subsequently, the air is discharged from the air outlet 203 by the air discharging mechanism 212.

In practice, the air discharging mechanism 212 may be selected a fan.

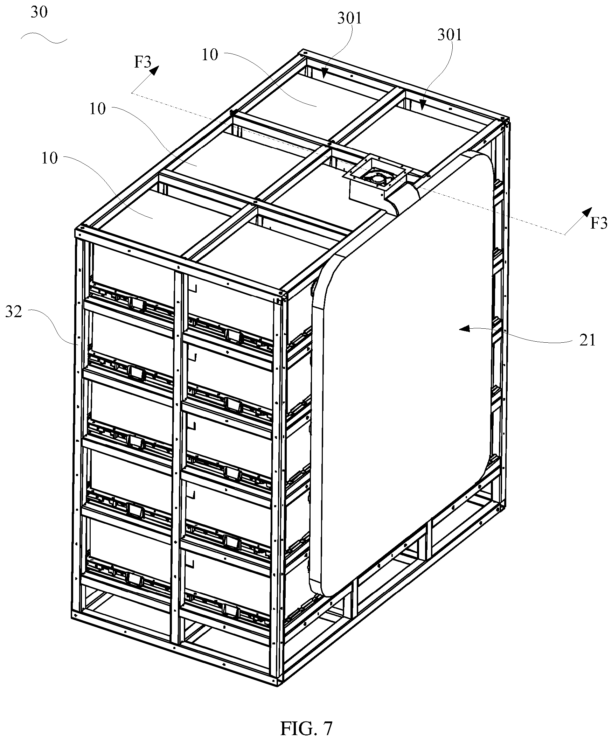

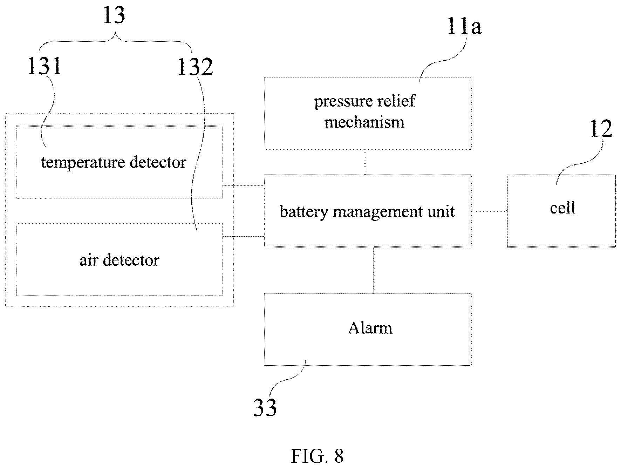

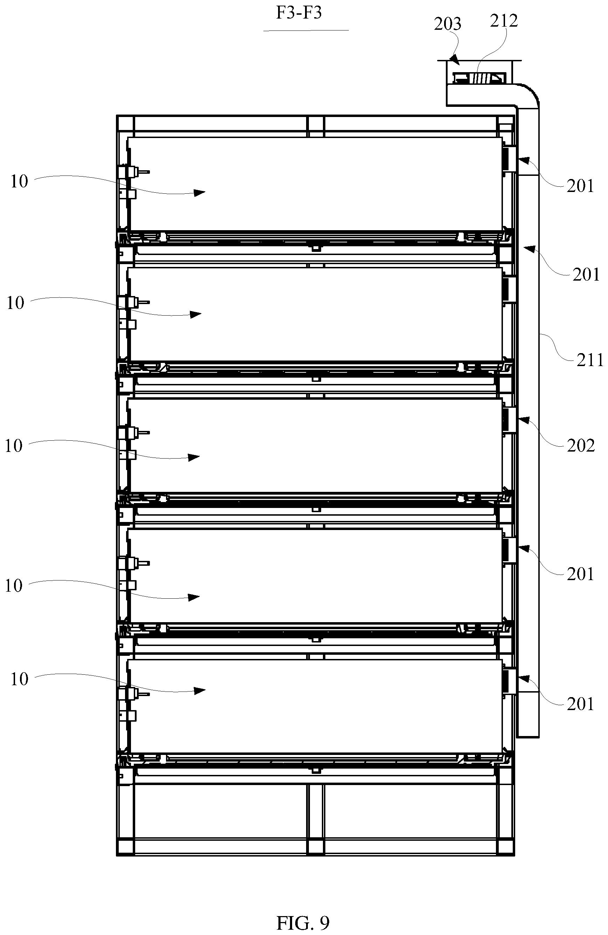

As shown in FIG. 7, FIG. 8, and FIG. 9, FIG. 7 is a perspective view of a battery pack 30 according to an embodiment of the present disclosure, FIG. 8 is a schematic diagram of the battery pack 30 shown in FIG. 8, and FIG. 9 is a cross-sectional view of the battery pack 30 shown in FIG. 7, taken along a line F3-F3. The battery pack 30 in the present embodiment includes a battery management unit 31 and the battery module in any of the above embodiments. The present embodiment will be illustrated by taking the battery module 20 described in the above as an example.

The battery management unit 31 is electrically connected to the pressure relief mechanism 11a, the cell 12, and the first detection unit 13. The battery management unit 31 determines, based on the detection result of the first detection unit 13, whether the cell has the thermal runaway. When the thermal runaway occurs, the battery management unit 31 controls the pressure relief mechanism 11a to expose the pressure relief port 103.

It is understood that, in the present implementation, the battery management unit 31 is electrically connected to the temperature detector 131 and the air detector 132 of the first detection unit 13.

Further, in the present embodiment, a plurality of battery modules 10 are arranged. The battery management unit 31 is electrically connected to the pressure relief mechanism 11a, the cell 12, and the first detection unit 13 of each battery module 10 of the plurality of battery modules 10, such that the first detection unit 13 of each battery module 10 performs detection independently. In this way, when the cells in the plurality of battery modules 10 have thermal runaway, each of the battery modules 10 individually discharges the air and intakes the air. Therefore, when one cell has thermal runaway, the thermal runaway is prevented from spreading to any other cell 12 that does not have thermal runaway.

In the present embodiment, the air discharging member 211 of the air discharging unit 21 defines a plurality of second air inlets 202 that are communicated with the air discharging channel 201. In this way, air inside the receiving spaces 101 of the plurality of battery modules 10 are discharged through the plurality of second air inlets 202 into the air discharging channel 201 to be further discharged out of the air outlet 203.

Further, the battery pack 30 in the present embodiment further includes a battery rack 32, defining a battery compartment 301. The housing 11 is received in the battery compartment 301. That is, the battery module 10 is received in the battery compartment 301. In the present embodiment, a plurality of the battery compartments 301 are defined, and each battery module 10 is received in a respective one of the plurality of battery compartments 301.

Further, the battery pack 30 in the present embodiment further includes an alarm 23. The battery management unit 31 is electrically connected to the alarm 23 to enable the battery management unit 31 to control, in response to determining that the cell 12 has the thermal runaway, the alarm 23 to give an alarm to alert the staff.

According to the present disclosure, the battery module includes the housing, the cell, and the first detection unit. The housing defines the receiving space, the pressure relief port communicated with the receiving space, and the first air inlet communicated with the receiving space. The pressure relief mechanism is arranged in the pressure relief port, and the air intaking mechanism is arranged in the first air inlet. The cell is received in the receiving space. The first detection unit is mounted on the housing and is configured to detect the predetermined object. The first detection unit is electrically connected to the pressure relief mechanism. The first detection unit, in response to detecting thermal runaway of the cell, the pressure relief mechanism is opened to expose the pressure relief port. In response to a pressure inside the receiving space being less than or equal to a pressure threshold, the air intaking mechanism is opened to expose the first air inlet. On the one hand, the first detection unit proactively detects the predetermined object. When the cell has thermal runaway, air is released actively. Compared to the passive air releasing method in the art, the active air releasing in the present disclosure avoids a situation in which, even though the cell has the thermal runaway, the internal pressure of the housing does not flush to open the pressure relief valve, such that failure of releasing the internal pressure of the housing is prevented. On the other hand, when the pressure inside the receiving space is less than or equal to the pressure threshold, the air intaking mechanism is opened to expose the first air inlet, such that external air may enter the receiving space, further alleviating the thermal runaway of the cell.

The above describes only a part of the embodiments of the present disclosure, and does not limit the scope of the present disclosure. Any equivalent device or equivalent process transformation performed based on the specification and the accompanying drawings of the present disclosure, applied directly or indirectly in other related technical fields, shall be included in the scope of the present disclosure.

## Claims

1. A battery module, comprising:
a housing (11), defining a receiving space (101), a pressure relief port (102) communicated with the receiving space (101), and a first air inlet (103) communicated with the receiving space (101), wherein a pressure relief mechanism (11a) is arranged in the pressure relief port (102), an air intaking mechanism (11b) is arranged in the first air inlet (103);
a cell (12), received in the receiving space (101);
a first detection unit (13), mounted on the housing (11) and configured to detect a predetermined object, wherein the first detection unit (13) is electrically connected to the pressure relief mechanism (11a); in response to the first detection unit (13) detecting that the cell (12) has thermal runaway, the pressure relief mechanism (11a) exposes the pressure relief port (102); in response to the first detection unit (13) detecting that a pressure in the receiving space (101) is less than or equal to a pressure threshold, the air intaking mechanism (11b) exposes the first air inlet (103).

2. The battery module according to claim 1, wherein, the first detection unit (13) includes a temperature detector (131), the predetermined object is the cell (12), the temperature detector (131) is configured to detect a temperature of the cell (12); and in response to the temperature of the cell (12) being greater than or equal to a temperature threshold, the pressure relief mechanism (11a) exposes the pressure relief port (102).

3. The battery module according to claim 1, wherein, the first detection unit (13) includes an air detector (132), the predetermined object is air in the receiving space (101), the air detector (132) is configured to detect composition of the air in the receiving space (101); and in response to the composition of the air in the receiving space (101) including a thermal-runaway gas, the pressure relief mechanism (11a) exposes the pressure relief port (102).

4. The battery module according to claim 1, wherein, the battery module further comprises an air discharging unit (21), in response to the pressure relief mechanism (11a) exposing the pressure relief port (102), the air discharging unit (21) is communicated with the pressure relief port (102) to discharge the air in the receiving space (101).

5. The battery module according to claim 4, wherein, the air discharging unit (21) comprises an air discharging member (211) and an air discharging mechanism (212); the air discharging member (211) defines an air discharging channel (201), a second air inlet (202) communicated with the air discharging channel (201), and an air outlet (203) communicated with the air discharging channel (201); in response to the pressure relief mechanism (11a) exposing the pressure relief port (102), the second air inlet (202) is communicated with the pressure relief port (102); and the air discharging mechanism (212) is disposed in the air outlet (203).

6. The battery module according to claim 1, wherein, the battery module further comprises a second detection unit, the second detection unit is configured to detect the pressure inside the receiving space (101).

7. The battery module according to claim 1, wherein, the pressure relief port (102) and the first air inlet (103) are disposed at opposite sides of the housing (11).

8. A battery pack, comprising a battery management unit (31) and the battery module according to any one of claims 1 to 7, the battery management unit (31) being electrically connected to the pressure relief mechanism (11a), the cell (12), and the first detection unit (13).

9. The battery pack according to claim 8, wherein, the battery pack further comprises a battery rack (32), the battery rack (32) defines a battery compartment (301), and the housing (11) is received in the battery compartment (301).

10. The battery pack according to claim 8, wherein, the battery pack further comprises an alarm (23), the battery management unit (31) is electrically connected to the alarm (23).
